(19) Europäisches Patentamt
European Patent Office
Office européen des brevets

(11) **EP 3 971 822 A2**

(12) **EUROPEAN PATENT APPLICATION**

(43) Date of publication:
**23.03.2022 Bulletin 2022/12**

(21) Application number: **21194793.2**

(22) Date of filing: **03.09.2021**

(51) International Patent Classification (IPC):
**G06T 5/00** (2006.01)          **G06T 5/50** (2006.01)
**G06T 7/50** (2017.01)          **G06T 7/73** (2017.01)
**G06V 40/20** (2022.01)

(52) Cooperative Patent Classification (CPC):
**G06T 5/002; G06T 5/50; G06T 7/50; G06T 7/75;
G06V 40/20;** G06T 2207/10016; G06T 2207/20084;
G06T 2207/20182; G06T 2207/20216;
G06T 2207/30196

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2020 JP 2020155757**

(71) Applicant: **FUJITSU LIMITED
Kanagawa 211-8588 (JP)**

(72) Inventors:
• **Awai, Shuji
Kanagawa, 211-0063 (JP)**
• **Konno, Takeshi
Kanagawa, 211-8588 (JP)**

(74) Representative: **Hoffmann Eitle
Patent- und Rechtsanwälte PartmbB
Arabellastraße 30
81925 München (DE)**

(54) **FILTERING METHOD, FILTERING PROGRAM, AND FILTERING APPARATUS**

(57)      A filtering method includes converting two-dimensional skeleton coordinates obtained through skeleton detection on a two-dimensional video, into three-dimensional skeleton coordinates, calculating, with reference to degree-of-influence data in which a degree of influence of each joint on an error in two-dimensional-to-three-dimensional coordinate conversion is associated with each of inclination classes that are sectioned in accordance with an inclination of a body axis, an estimated value of the error from the three-dimensional skeleton coordinates and from a degree of influence of each joint that corresponds to an inclination class to which the three-dimensional skeleton coordinates belong, and removing three-dimensional skeleton coordinates for which the estimated value of the error is greater than or equal to a threshold.

FIG. 1

## Description

[Field]

The embodiments discussed herein are related to a filtering technique.

[Background Art]

There is known a technique called skeleton detection for detecting a skeleton of a person from a video. For example, there is a deep learning (DL) framework that converts two-dimensional (2D) skeleton coordinates obtained from a 2D video into three-dimensional (3D) skeleton coordinates.

From an aspect of reducing an influence of abnormal values that may be included in time series data of 3D skeleton coordinates obtained through such conversion, the time series data of the 3D skeleton coordinates is smoothed by being replaced with an average of the 3D skeleton coordinates in adjacent frames defined within a certain range.

[Citation List]

[Non Patent Literature]

[NPL 1] Oppenheim, Alan V., Schafer, Ronald W., and Buck, John R., Discrete-Time Signal Processing 2nd Ed., Prentice Hall, 1999.
[NPL 2] Mitra, Sanjit K., Digital Signal Processing 2nd Ed., McGraw-Hill, 2001.
[NPL 3] Gustafsson, F., "Determining the initial states in forwardbackward filtering", IEEE (R) Transactions on Signal Processing, Vol. 44, pp. 988-992, April 1996.
[NPL 4] Martinez, Julieta, Hossain, Rayat, Romero, Javier, Little, James J., "A simple yet effective baseline for 3d human pose estimation", In ICCV, 2017.
[NPL 5] Mehta, D., Sridhar, S., Sotnychenko, O., Rhodin, H., Shafiei, M., Seidel, H.-P., Xu, W., Casas, D., and Theobalt, C., "VNect: Real-time 3d Human Pose Estimation with a Single RGB Camera", in ACM TOG, 2017 are disclosed as related art.

[Summary of Invention]

[Technical Problem]

However, since the abnormal values and the normal values included in the time series data of the 3D skeleton coordinates are averaged in the smoothing described above, an adverse influence of the abnormal values of the 3D skeleton coordinates on the normal values still remains.

In one aspect, an object of the present disclosure is to provide a filtering method, a filtering program, and a filtering apparatus that are capable of implementing a higher accuracy in smoothing of 3D skeleton coordinates.

[Solution to Problem]

In one aspect of embodiment, a computer performs following a filtering method. The filtering method includes converting two-dimensional skeleton coordinates obtained through skeleton detection on a two-dimensional video, into three-dimensional skeleton coordinates; calculating, with reference to degree-of-influence data in which a degree of influence of each joint on an error in two-dimensional-to-three-dimensional coordinate conversion is associated with each of inclination classes that are sectioned in accordance with an inclination of a body axis, an estimated value of the error from the three-dimensional skeleton coordinates and from a degree of influence of each joint that corresponds to an inclination class to which the three-dimensional skeleton coordinates belong; and removing three-dimensional skeleton coordinates for which the estimated value of the error is greater than or equal to a threshold.

[Effects of Invention]

A higher accuracy in smoothing of 3D skeleton coordinates may be implemented.

[Brief Description of Drawings]

FIG. 1 is a diagram illustrating an example of an action recognition service according to a first embodiment;
FIG. 2 is a diagram illustrating an example of functions implemented by an object recognition function;
FIG. 3 is a diagram illustrating an example of a skeleton detection result;
FIG. 4 is a diagram illustrating an example of a 2D-to-3D conversion result;
FIG. 5 is a diagram illustrating an example of an inclination $w_f$ of a body axis;
FIG. 6 is a diagram illustrating an example of inclination classes;
FIG. 7 is a diagram illustrating an example of a method of calculating a coefficient k;
FIG. 8 is a diagram illustrating an example of a smoothing result;
FIG. 9 is a block diagram illustrating an example of a functional configuration of an action recognition apparatus according to the first embodiment;
FIG. 10 is a diagram illustrating an example of a functional configuration of an object recognition unit;
FIG. 11 is a flowchart illustrating a procedure of action recognition processing according to the first embodiment;
FIG. 12 is a flowchart illustrating a procedure of object recognition processing according to the first embodiment; and
FIG. 13 is a diagram illustrating an example of a hardware configuration of a computer.

[Description of Embodiments]

A filtering method, a filtering program, and a filtering apparatus according to the present application will be described below with reference to the accompanying drawings. Note that embodiments do not intend to limit the disclosed technique. Individual embodiments may be appropriately combined within a range not causing any contradiction in processing content.

[First Embodiment]

A use case in which a filtering function according to the present embodiment is applied to an action recognition service which is merely as an example will be described by way of example. However, this is merely an example, and the filtering function may be applied to any services that use 3D skeleton coordinates other than the action recognition service.

[One Example of Use Case]

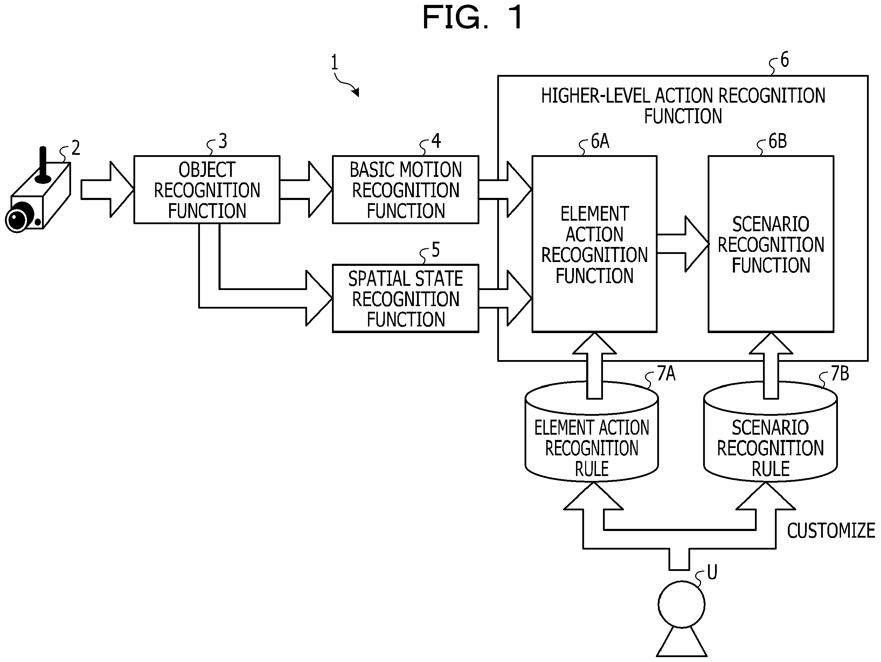

FIG. 1 is a diagram illustrating an example of an action recognition service according to a first embodiment. An action recognition service 1 illustrated in FIG. 1 provides a service for recognizing an action of a subject, for example, a person from a video obtained by a camera 2. In such an action recognition service 1, a higher-level action that is complicated as a result of a plurality of motions being combined is set as a recognition target, which is merely an example. For example, examples of the higher-level action may include a suspicious action, a purchase action, a work action, and other arbitrary actions.

Except for the action recognition service 1 described above, recognition of a "higher-level action" is accompanied by preparation of a large amount of videos or the like including the action as training data. However, it is substantially difficult to prepare such a large amount of training data, or even if a large amount of training data may be prepared, the preparation takes time and effort. Such a circumstance makes introduction to the practical use difficult in one aspect.

From an aspect of omitting preparation of such a large amount of training data, the action recognition service 1 described above recognizes a higher-level action, based on a combination of "element actions" that are recognized through time-series analysis and spatial analysis from "basic motions" performed in everyday life. The time-series analysis and the spatial analysis will be described later.

As illustrated in FIG. 1, the action recognition service 1 may include an object recognition function 3, a basic motion recognition function 4, a spatial state recognition function 5, a higher-level action recognition function 6, and so on.

The object recognition function 3 is a function for recognizing an object from a video captured by the camera 2. The "object" mentioned herein refers to a subject, in a video, to be set as a target of action recognition. Examples of the object may include a person to be set as a target of action recognition. In addition to this, examples of the object may include an object relating to action recognition, for example, a tool used by a person or a fixture, a commodity, equipment, or the like disposed in an environment.

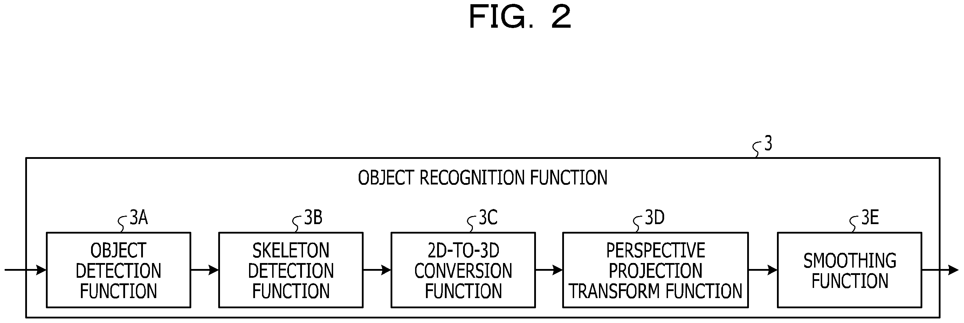

FIG. 2 is a diagram illustrating an example of functions implemented by the object recognition function 3. As illustrated in FIG. 2, the object recognition function 3 includes an object detection function 3A, a skeleton detection function 3B, a 2D-to-3D conversion function 3C, a perspective projection transform function 3D, and a smoothing function 3E.

The object detection function 3A performs, for each frame of a video, recognition of a region where an object is present, for example, so-called object detection. In addition to such object detection, recognition of individual objects or a class of an object may be performed. By applying processing also referred to as skeleton detection (skeleton estimation) or pose detection (pose estimation) to a person among objects, the skeleton detection function 3B extracts skeleton information including information on the position of each joint. Such skeleton detection is performed for individual frames of a video. Consequently, 2D skeleton coordinates in the individual frames of the video, for example, time series data of 2D skeleton coordinates are obtained. The 2D-to-3D conversion function 3C converts the time series data of the 2D skeleton coordinates into time series data of 3D skeleton coordinates. The series of functions of the object detection function 3A, the skeleton detection function 3B, and the 2D-to-3D conversion function 3C may be implemented by a DL framework including a model that has learned objects, a model that has learned skeleton detection, and a model that has learned 2D-to-3D conversion, which is merely an example. The perspective projection transform function 3D performs axis correction on 3D skeleton coordinates through axis setting in perspective projection transform. For example, the perspective projection transform function 3D performs axis correction for correcting an inclination of an axis in a depth direction of the camera 2, based on an estimated value of a camera parameter calculated from the 3D skeleton coordinates and a known camera parameter of the camera 2, for example, a calibration result of the camera 2 before operation. The smoothing function 3E performs smoothing in which the time series data of the 3D skeleton coordinates is replaced with an average of the 3D skeleton coordinates in adjacent frames defined in a certain range.

The basic motion recognition function 4 is a function for recognizing a basic motion from 3D skeleton coordinates in each frame. The "basic motions" mentioned herein may include a "whole body action" in which a motion appears in the whole body of a person, a "partial action" in which a motion appears in a part of the body of a person, and so on. Among these, examples of the "whole body action" include actions such as "walking", "running", and "staying still". Examples of the "partial action" include actions such as "raising the right hand", "looking down", and "looking straight". Since the "whole body action" and the "partial action" are "basic motions" performed in the daily life, the "whole body action" and the "partial action" are simple motions as compared with the "higher-level action". Therefore, collecting videos containing the "basic motions" is easy, and highly accurate recognition may be implemented using a trained model. Recognition of the basic motions may be implemented by using a model that has learned the basic motions in accordance with an arbitrary machine learning algorithm, for example, a model such as a neural network or a classifier, which is merely an example.

The spatial state recognition function 5 recognizes a spatial state in accordance with whether or not a relationship between a person determined by object recognition and a space around the person satisfies a certain condition. The "space" mentioned herein may be a so-called region of interest (ROI) defined in a video or may be a region in which an object is recognized through object recognition.

In one aspect, the spatial state recognition function 5 is capable of recognizing a spatial state by performing threshold-based determination for a distance between a person and a space. For example, a case will be exemplified where a skeleton into which 3D skeleton coordinates of a person are modeled and a region where a certain object, for example, a chair is present are obtained as an example of an object recognition result. In this case, a spatial state "chair" is recognized through determination as to whether a distance between a center position of the hip, which is calculated from a right hip position and the left hip position among joints included in the skeleton, and a barycenter position of the region of the object is less than or equal to a certain threshold. In another aspect, the spatial state recognition function 5 is capable of recognizing a spatial state by performing determination as to whether the position of the target is inside or outside a region between a person and a space. For example, a case will be exemplified where a skeleton into which 3D skeleton coordinates of a person are modeled and a region where a certain object, for example, a keyboard is present are obtained as an example of an object recognition result. In this case, a spatial state "keyboard" is recognized through determination as to whether a position of the left wrist among joints included in the skeleton is inside a region of the keyboard. The example in which a space is defined by an object has been described merely as an example. However, a space does not necessarily have to be defined by an object, and a space may be defined by a ROI or the like set in a video.

The higher-level action recognition function 6 is a function for recognizing a higher-level action. As illustrated in FIG. 1, the higher-level action recognition function 6 may include an element action recognition function 6A, a scenario recognition function 6B, and the like.

The element action recognition function 6A is a function for recognizing an element action by comparing time series data of a recognition result regarding one or a plurality of basic motions and/or a spatial state with an element action recognition rule 7A. In the element action recognition rule 7A, at least one of or both of a time series pattern regarding one or a plurality of basic motions and a spatial state are defined for each element action to be recognized. Examples of the time series pattern include, for example, the continuity of basic motions, the state transition of basic motions, and so on.

The scenario recognition function 6B is a function for recognizing a higher-level action by comparing the element action recognition result with a scenario recognition rule 7B. In the scenario recognition rule 7B, a combination of element actions is defined as a scenario for each higher-level action to be recognized. Such a scenario may be defined as a sequence, logical operations, or the like.

The element action recognition rule 7A and the scenario recognition rule 7B may be set not only by a system definition but also by a user definition. For example, a user U such as a system engineer at a business entity that provides the action recognition service 1 described above or a customer of the action recognition service 1 described above is permitted to edit the element action recognition rule 7A and the scenario recognition rule 7B. In this manner, customization by the user U is enabled.

[One Aspect of Problem]

As described in the section "BACKGROUND" above, abnormal values and normal values included in time series data of 3D skeleton coordinates are averaged in the smoothing described above. Thus, an adverse influence of the abnormal values of the 3D skeleton coordinates on the normal values still remains.

Even when the perspective projection transform function 3D described above is used, it is difficult to avoid a situation in which abnormal values are included in time series data of 3D skeleton coordinates on which the smoothing function 3E described above performs smoothing.

For example, patterns in which abnormal values of 3D skeleton coordinates occur may be classified into two patterns below. The first pattern is a pattern in which 2D-to-3D conversion itself is correct but 3D skeleton coordinates with respect to a rotated axis in a depth direction of the camera 2 are obtained. The second pattern is a pattern in which 2D-to-3D conversion itself is incorrect. This may occur when a few pieces of data that matches an angle of view of a camera, for example, the camera 2 at the time of inference is present in training data used in machine learning of the 2D-to-3D conversion model, when data of the posture of a person contained in a video input at the time of inference is not present in the training data, or the like.

With the perspective projection transform function 3D described above, a possibility for correcting the abnormal values of the 3D skeleton coordinates that occur in the first pattern to the normal values remains but it is difficult to correct the abnormal values of the 3D skeleton coordinates that occur in the second pattern to the normal values. This is because it is difficult to accurately calculate a correction value for correcting the inclination of the axis in the depth direction of the camera 2 in the second pattern, partly because the 2D-to-3D conversion itself is incorrect.

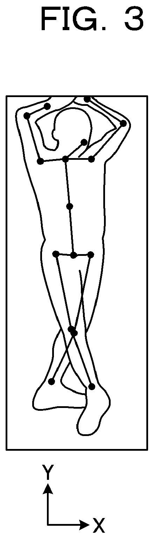

An example of the abnormal values of the 3D skeleton coordinates that occur in the second pattern will be described. FIG. 3 is a diagram illustrating an example of a skeleton detection result. FIG. 3 illustrates an example in which a scene where a windup motion is performed is captured by the camera 2, which is merely an example. FIG. 3 illustrates an extracted region of a person determined through object detection in the video captured by the camera 2. FIG. 3 illustrates a skeleton into which positions of individual joints are modeled as dots and bones linking the joints are modeled as lines, based on the 2D skeleton coordinates obtained through skeleton detection. For example, when a video containing a pose similar to the windup pose illustrated in FIG. 3 is not included in training data used in machine learning of the 2D-to-3D conversion model, there may be a case where the 2D skeleton coordinates illustrated in FIG. 3 are not correctly converted into 3D skeleton coordinates.

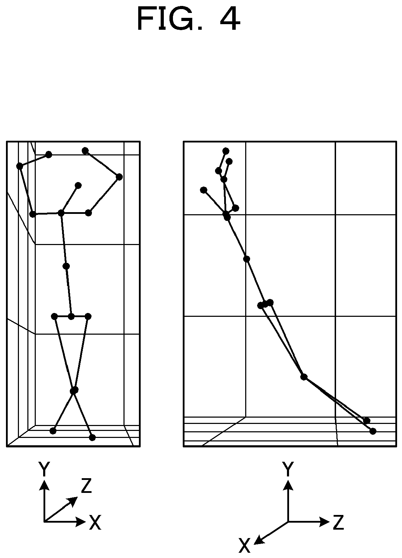

FIG. 4 is a diagram illustrating an example of a 2D-to-3D conversion result. FIG. 4 illustrates a conversion result of the 2D skeleton coordinates illustrated in FIG. 3 into 3D skeleton coordinates. FIG. 4 illustrates 3D skeleton coordinates that are defined by a three-dimensional coordinate system in which the left-right direction of the camera 2 is set as an X axis, the up-down direction of the camera 2 is set as a Y axis, and the depth direction of the camera 2 is set as a Z axis. FIG. 4 illustrates, side by side, a skeleton into which the 3D skeleton coordinates are modeled on an XY plane and a skeleton into which the 3D skeleton coordinates are modeled on a YZ plane. As illustrated in FIG. 4, when the XY plane is viewed from the front direction of the camera 2, it is difficult to observe the abnormal values of the 3D skeleton coordinates that appear in the front-rear direction of the camera 2. On the other hand, when the YZ plane is viewed from the lateral surface direction of the camera 2, the abnormal values of the 3D skeleton coordinates that represent the body axis of the person inclined in a direction toward the front of the camera 2 are observed. For such abnormal values of the 3D skeleton coordinates, a correction value for correcting the inclination of the axis in the depth direction of the camera 2 may not be accurately calculated, partly because the 2D-to-3D conversion itself is not correctly performed. Therefore, even when axis correction is performed by the perspective projection transform function 3D described above, it is difficult to correct the abnormal values of the 3D skeleton coordinates to normal values.

[One Aspect of Problem-Solving Approach]

Accordingly, in the present embodiment, a problem-solving approach is adopted in which a filtering function for removing abnormal values from 3D skeleton coordinates subjected to smoothing before the smoothing is performed on the 3D skeleton coordinates is added to the action recognition service 1. Such a problem-solving approach may be implemented on condition that a computer is capable of identifying whether 3D skeleton coordinates are normal values or abnormal values. Therefore, before smoothing is performed on the 3D skeleton coordinates, the filtering function according to the present embodiment removes 3D skeleton coordinates for which an estimated value of an error is greater than or equal to a threshold value. The estimated value of the error is determined from the 3D skeleton coordinates obtained through 2D-to-3D conversion and a degree of influence on the error in the 2D-to-3D conversion corresponding to the inclination of the body axis.

As described above, from an aspect of calculating the estimated value of the error in the 2D-to-3D conversion, the degree of influence used in calculation of the estimated value may be set in advance prior to the operation of the action recognition service 1 in the present embodiment.

In one aspect, the error in the 2D-to-3D conversion varies depending on the degree of inclination of the body axis. For this reason, the above-described degree of influence is defined for individual "inclination classes" that are sectioned according to the degree of inclination of the body axis, which is merely an example.

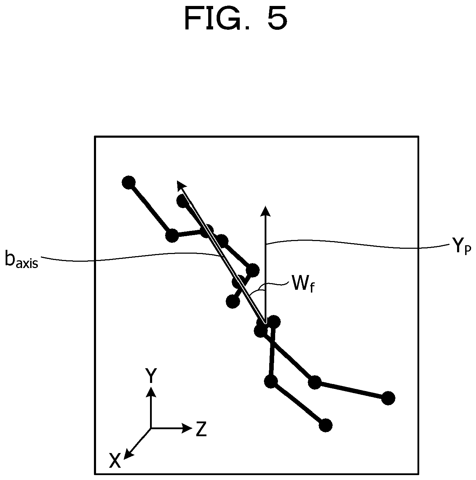

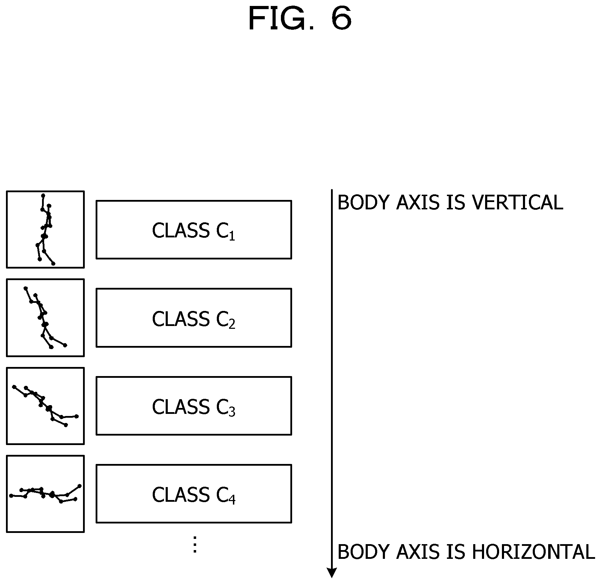

FIG. 5 is a diagram illustrating an example of an inclination $w_f$ of the body axis. FIG. 6 is a diagram illustrating an example of inclination classes. As illustrated in FIG. 5, an angle formed by a body axis $b_{axis}$ obtained by projecting a line segment linking the center of the hip and the head onto the YZ plane and by a positive direction (upward direction) $Y_P$ of the Y axis is set as the inclination $w_f$. Inclination classes $C_w$ may be sectioned by using this inclination $w_f$. For example, as illustrated in FIG. 6, the inclination classes $C_w$ may be sectioned in a manner of an inclination class $C_1$, an inclination class $C_2$, an inclination class $C_3$, an inclination class $C_4$, ... sequentially from a class in which the body axis $b_{axis}$ is nearly vertical, for example, a class in which the inclination $w_f$ is small. The class widths with which the inclination classes $C_w$ are sectioned may be the same or different between the individual classes. FIG. 6 illustrates the example in which the inclination classes are sectioned based on the counterclockwise inclination about the X axis serving as the rotation axis. However, the inclination classes may be further sectioned based on the clockwise inclination about the X axis serving as the rotation axis, or the inclinations of the same value may be sectioned to the same inclination class.

Under such sections of the inclination classes $C_w$, the degree of influence on the error in the 2D-to-3D conversion is defined for each of the inclination classes $C_w$. A coefficient $k_i$ for each joint i in a case where a variance of the error in the 2D-to-3D conversion observed at each joint i is set as a response variable and a distance of each joint i from the hip is set as an explanatory variable is calculated, which is merely an example. The "coefficient $k_i$" thus calculated is equivalent to a degree that the joint i contributes to the error in the 2D-to-3D conversion, for example, the degree of influence.

The error in the 2D-to-3D conversion may be defined by a distance from a correct value, which is merely an example. As an example of such a correct value, an actual measurement value measured by a 3D camera or motion capture may be used. For example, a distance between correct values of the 3D skeleton coordinates measured by motion capture and calculated values of the 3D skeleton coordinates obtained by 2D-to-3D conversion may be used as the error in the 2D-to-3D conversion.

The correct values and the calculated values of the 3D skeleton coordinates used in calculation of the coefficient $k_i$ described above may be designated by a user setting or a system setting. For example, it is possible to automatically extract the correct values and the calculated values of the 3D skeleton coordinates observed when the distance between the correct values of the 3D skeleton coordinates and the calculated values of the 3D skeleton coordinates, for example, the error in the 2D-to-3D conversion exceeds a certain threshold and becomes a peak. In addition to this, time series data of the correct values of the 3D skeleton coordinates and time series data of the calculated value of the 3D skeleton coordinates, or time series data of differences between the correct values and the calculated values may be displayed as a graph. Designation of a peak or the like of the abnormal values may be accepted on the graph via a user interface. The calculated values of the 3D skeleton coordinates used in calculation of the coefficient $k_i$ may be values that result from axis correction based on perspective projection transform or may be values for which the axis correction is not performed.

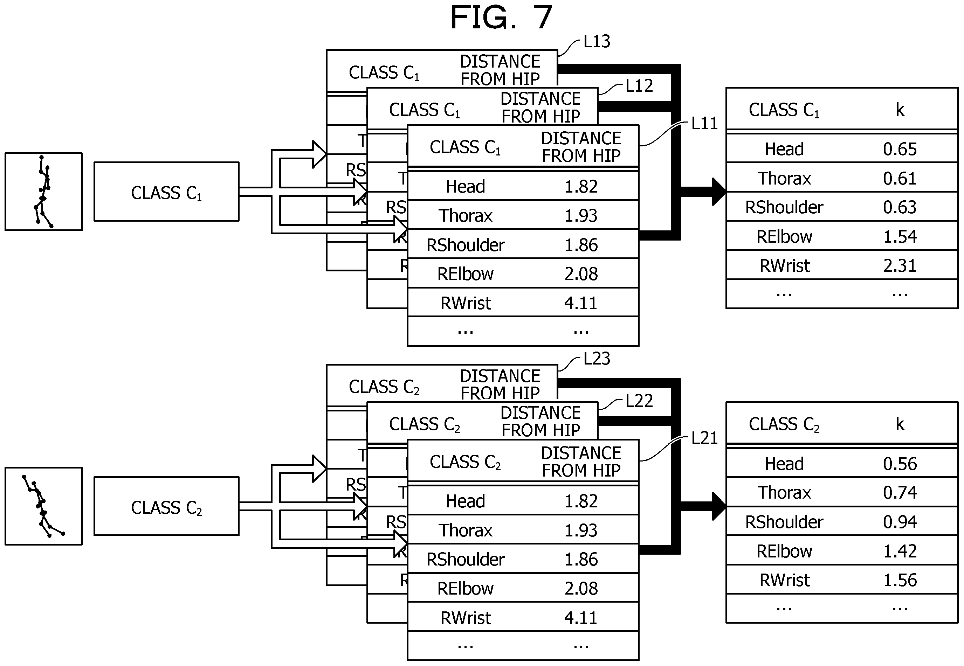

FIG. 7 is a diagram illustrating an example of a method of calculating the coefficient k. FIG. 7 illustrates, as an example of the inclination classes $C_w$, two classes that are the inclination class $C_1$ and the inclination class $C_2$ in an extracted manner, and illustrates calculation results of the coefficient k for each of the inclination class $C_1$ and the inclination class $C_2$.

For example, in the example of the inclination class $C_1$ illustrated in FIG. 7, lists of relative coordinates of individual joints i are illustrated as three lists L11 to L13. These three lists L11 to L13 may be obtained by performing the following calculation for each set of calculated values of the 3D skeleton coordinates designated by the user setting or the system setting. For example, for each joint i, the distance of the joint i from the center of the hip is calculated from the 3D coordinates of the joint i. The "hip" mentioned herein refers to the coordinates of the middle point of the left hip and the right hip. The distance of the joint i from the hip is then normalized by a length of a hip section and a length of a neck section from an aspect of making the scale of the subject in different videos substantially uniform when the 3D skeleton coordinates obtained from the different videos are used in calculation of the coefficient k. The lists L11 to L13 are obtained by listing the normalized distances of the joint i from the hip. For example, the list L11 is taken as an example. The list L11 includes a distance "1.82" of the head from the hip, a distance "1.93" of the thorax from the hip, a distance "1.86" of the right shoulder from the hip, a distance "2.08" of the right elbow from the hip, a distance "4.11" of the right wrist from the hip, and so on. Then, a coefficient $k_i$ is calculated in accordance with an algorithm of multivariable analysis such as multiple regression analysis. The coefficient $k_i$ is a coefficient in a case where the variance of the errors in the 2D-to-3D conversion for each joint i is set as a response variable, and where the lists L11 to L13 are set as an explanatory variable. The errors in the 2D-to-3D conversion correspond to the distances between the correct values of the 3D skeleton coordinates and the calculated values of the 3D skeleton coordinates from which the lists L11 to L13 are generated. As a result, as the coefficients $k_i$ of the inclination class $C_1$, a coefficient $k_i$ "0.65" for the head, a coefficient $k_2$ "0.61" for the thorax, a coefficient $k_3$ "0.63" for the right shoulder, a coefficient $k_4$ "1.54" for the right elbow, a coefficient ks "2.31" for the right wrist, ..., and a coefficient $k_n$ "..." for the joint n are obtained. The example of the inclination class $C_1$ has been presented. However, it is obvious that the coefficient $k_i$ may be calculated for the inclination class $C_2$ and the following inclination classes in the same manner as the inclination class $C_1$.

As described above, before the operation of the action recognition service 1, the coefficient $k_i$ is defined, for each inclination class $C_w$, as the degree of influence on the error of the 2D-to-3D conversion. During the operation of the action recognition service 1, the filtering function according to the present embodiment classifies 3D skeleton coordinates obtained through 2D-to-3D conversion or 3D skeleton coordinates on which axis correction is performed in perspective projection transform, into the inclination class $C_w$ corresponding to the inclination $w_f$ of the body axis. The filtering function according to the present embodiment calculates an estimated value of the error in the 2D-to-3D conversion by using the coefficient $k_i$ for the inclination class corresponding to the classification result among the coefficients $k_i$ defined for the respective inclination classes $C_w$. At this time, the filtering function according to the present embodiment calculates an estimated value Error of the error in the 2D-to-3D conversion in accordance with equation (1) below. "i" in equation (1) below denotes an index assigned to a joint and is expressed by a natural number of 1 to n, for example. "d" in equation (1) below denotes relative coordinates of the joint i from the hip that are calculated from the calculated values of the 3D skeleton coordinates, and is obtained by calculating, from the 3D coordinates of the joint i, a distance of the joint i from the center of the hip and by normalizing the distance by the length of the hip section and the length of the neck section. "$k_i$" in equation (1) below denotes a coefficient defined for each inclination class $C_w$. "n" in equation (1) below denotes the number of joints.

[Equation 1]

$$ Error = \sum_{i=0}^{n} k_i d \quad \cdots (1) $$

The filtering function according to the present embodiment determines whether or not the estimated value Error of the error in the 2D-to-3D conversion is greater than or equal to a certain threshold T. When the estimated value Error of the error in the 2D-to-3D conversion is greater than or equal to the threshold T, the filtering function according to the present embodiment removes the 3D skeleton coordinates. Thus, filtering for removing the 3D skeleton coordinates for which the estimated value Error of the error in the 2D-to-3D conversion is greater than or equal to the threshold T from the time series data of the 3D skeleton coordinates is performed. The filtering function according to the present embodiment performs linear interpolation, polynomial interpolation, spline interpolation, or the like for an interval from which the 3D skeleton coordinates are removed by filtering in the time series data of the 3D skeleton coordinates after the filtering. Thus, a missing data portion caused by the removal may be interpolated. Smoothing is performed on the time series data of the 3D skeleton coordinates resulting from interpolation based on an arbitrary interpolation method in this manner.

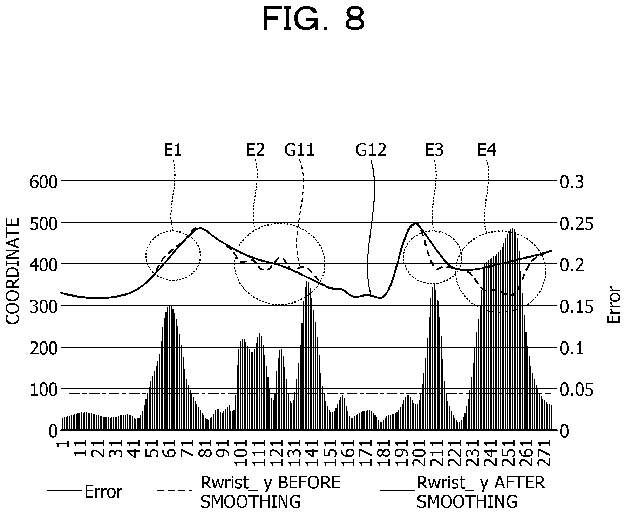

FIG. 8 is a diagram illustrating an example of a smoothing result. The horizontal axis of the graph illustrated in FIG. 8 corresponds to the frame number of a video. The vertical axis of the graph illustrated in FIG. 8 corresponds to the value of the Y coordinate of the 3D coordinates and also corresponds to the estimated value Error of the error in the 2D-to-3D conversion. FIG. 8 illustrates, using a broken line, a graph G11 corresponding to the time series data of the Y coordinate of the right wrist before smoothing, and illustrates, using a solid line, a graph G12 corresponding to the time series data of the Y coordinate of the right wrist after smoothing. FIG. 8 also illustrates a bar graph corresponding to the time series data of the estimated value Error of the error in the 2D-to-3D conversion. In FIG. 8, the threshold T used by the above-described filtering function for removal is set to "0.04", and portions of the graph G11 and the graph G12 corresponding to values greater than or equal to the threshold T are illustrated as E1 to E4 in a state in which the portions are surrounded by broken lines.

As indicated by the bar graph in FIG. 8, since the estimated value Error of the error in the 2D-to-3D conversion is greater than or equal to the threshold T at the four points E1 to E4, the occurrence of abnormal values is highly probable. The 3D skeleton coordinates of the portions corresponding to the four points E1 to E4 where the occurrence of abnormal values is highly probable are removed from the graph G11 by the filtering function according to the present embodiment. Such filtering may suppress a situation in which the time series data of the 3D skeleton coordinates subjected to smoothing includes the portions corresponding to the four points E1 to E4 in the graph G11. For the portions corresponding to the four points E1 to E4 from which the 3D skeleton coordinates are removed from the graph G11, interpolation is performed using an arbitrary interpolation method. Thereafter, smoothing is performed. As a result, as indicated by the graph G12 in FIG. 8, an adverse influence of the 3D skeleton coordinates of the portions corresponding to the four points E1 to E4 where the occurrence of abnormal values is highly probable on the normal values may be suppressed.

Therefore, with the filtering function according to the present embodiment, a higher accuracy in smoothing of 3D skeleton coordinates may be implemented. With implementation of a higher accuracy in smoothing, an improvement in the recognition accuracy of the basic motions, an improvement in the recognition accuracy of the element actions, and ultimately an improvement in the recognition accuracy of the higher-level actions may be implemented. Since highly accurate 3D skeleton coordinates may be obtained from calculated values of the 3D skeleton coordinates obtained through 2D-to-3D conversion, the use of hardware such as a 3D camera that is more costly than a 2D camera and of software for motion capture or the like may be avoided.

[Functional Configuration of Action Recognition Apparatus 10]

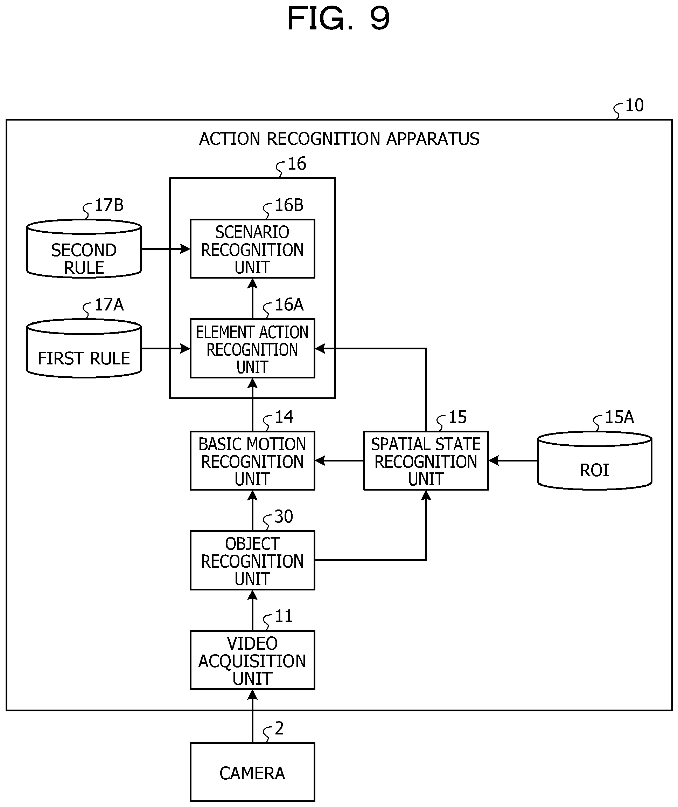

FIG. 9 is a block diagram illustrating an example of a functional configuration of an action recognition apparatus 10 according to the first embodiment. The action recognition apparatus 10 illustrated in FIG. 9 corresponds to an example of a computer that provides the action recognition service 1 described above.

As one embodiment, the action recognition apparatus 10 may be implemented by installing, as package software or online software, an action recognition program that implements the above-described action recognition service 1 onto an arbitrary computer. For example, the action recognition apparatus 10 may be implemented as a Software as a Service (SaaS)-type application and may provide the above-described action recognition service 1 as a cloud service. The implementation is not limited this, and the action recognition apparatus 10 may be implemented as a server that provides functions corresponding to the above-described action recognition service 1 in an onpremises manner.

As illustrated in FIG. 9, a camera 2 corresponding to an example of an image capturing apparatus may be coupled to the action recognition apparatus 10. The action recognition apparatus 10 and the camera 2 may be communicably connected via an arbitrary network. For example, the network may be an arbitrary type of wired or wireless communication network such as the Internet or a local region network (LAN). For convenience of explanation, FIGs. 1 and 9 illustrate an example in which a single camera 2 is coupled to a single action recognition apparatus 10. However, a plurality of cameras 2 may be coupled to a single action recognition apparatus 10.

As illustrated in FIG. 9, the action recognition apparatus 10 includes a video acquisition unit 11, an object recognition unit 30, a basic motion recognition unit 14, a spatial state recognition unit 15, an ROI storage unit 15A, a higher-level action recognition unit 16, a first rule storage unit 17A, and a second rule storage unit 17B. In addition to the functional units illustrated in FIG. 9, the action recognition apparatus 10 may include various functional units which a known computer has, for example, functions corresponding to an input/output interface, a communication interface, and so on.

The functional units such as the video acquisition unit 11, an object recognition unit 13, the basic motion recognition unit 14, the spatial state recognition unit 15, and the higher-level action recognition unit 16 illustrated in FIG. 9 are virtually implemented by a hardware processor such as a central processing unit (CPU) or a microprocessor unit (MPU). For example, the processor reads a program such as the action recognition program in which the above-described action recognition service 1 is packaged, as well as an operating system (OS) from a storage device (not illustrated) such as a hard disk drive (HDD), an optical disc, or a solid-state drive (SSD), for example. The processor then executes the above-described action recognition program, and loads processes corresponding to the above-described functional units into a memory such as a random-access memory (RAM). As a result of the above-described action recognition program being executed in this manner, the functional units described above are virtually implemented as the processes. Although the CPU or the MPU is exemplified as one example of the processor, the functional units described above may be implemented by an arbitrary processor which may be of a general-purpose type or a specific type. In addition to this, the functional units described above or some of the functional units may be implemented by hard wired logic such as an application-specific integrated circuit (ASIC) or a fieldprogrammable gate array (FPGA).

The storage units such as the first rule storage unit 17A and the second rule storage unit 17B described above may be implemented as auxiliary storage devices such as HDDs, optical discs, or SSDs, or may be implemented by allocating part of a storage area of an auxiliary storage device.

The video acquisition unit 11 is a processing unit that acquires a video. In one aspect, the video acquisition unit 11 is capable of acquiring a video transmitted from the camera 2 in units of frames. In another aspect, the video acquisition unit 11 is also capable of buffering the video transmitted from the camera 2 in a certain storage area and acquiring a video sequence. Information source from which the video acquisition unit 11 acquires a video may be an arbitrary information source and is not limited to the camera 2. For example, the video acquisition unit 11 may also acquire a video from a storage storing videos, for example, an auxiliary storage device such as a hard disc or an optical disc or a removable medium such as a memory card or a Universal Serial Bus (USB) memory. In addition to this, the video acquisition unit 11 may also acquire a video from an external device other than the camera 2 via a network.

The object recognition unit 30 is a processing unit that recognizes an object from a video. The object recognition unit 13 may correspond to the object recognition function 3 illustrated in FIG. 1. As one embodiment, the object recognition unit 13 recognizes an object for each frame of a video. As described above, "recognition" mentioned herein may include recognition of a region where an object is present, which is so-called object detection, in addition to recognition of individual objects or a class of an object. Such object recognition may be implemented by a model that has learned objects in accordance with an arbitrary machine learning algorithm, for example, deep learning or like, which is merely an example. By applying processing also referred to as skeleton detection or pose detection (pose estimation) to a person among objects, the object recognition unit 30 extracts skeleton information including information on the position of each joint.

The basic motion recognition unit 14 is a processing unit that recognizes a basic motion from the skeleton information in each frame. The basic motion recognition unit 14 may correspond to the basic motion recognition function 4 illustrated in FIG. 1. Recognition of the basic motions may be implemented by using a model that has learned the basic motions in accordance with an arbitrary machine learning algorithm, for example, a model such as a neural network or a classifier, which is merely an example. In this case, the basic motion recognition unit 14 inputs, to the aforementioned model, information on the position of each joint acquired by the object recognition unit 30 in units of frames. Consequently, basic motion recognition results for the whole body and each part are obtained in units of frames.

The spatial state recognition unit 15 is a processing unit that recognizes a spatial state in accordance with whether or not a relationship between a person determined as the object recognition result by the object recognition unit 30 and a space around the person satisfies a certain condition. The spatial state recognition unit 15 may correspond to the spatial state recognition function 5 illustrated in FIG. 1.

In one aspect, the spatial state recognition unit 15 is capable of recognizing a spatial state by performing threshold-based determination for a distance between a person and a space. For example, a case will be exemplified where a skeleton into which 3D skeleton coordinates of a person are modeled and a region where a certain object, for example, a chair is present are obtained as an example of an object recognition result. In this case, a spatial state "chair" is recognized through determination as to whether a distance between a center position of the hip, which is calculated from a right hip position and the left hip position among joints included in the skeleton, and a barycenter position of the region of the object is less than or equal to a certain threshold. In another aspect, the spatial state recognition unit 15 is capable of recognizing a spatial state by performing determination as to whether the position of the target is inside or outside a region between a person and a space. For example, a case will be exemplified where a skeleton into which 3D skeleton coordinates of a person are modeled and a region where a certain object, for example, a keyboard is present are obtained as an example of an object recognition result. In this case, a spatial state "keyboard" is recognized through determination as to whether a position of the left wrist among joints included in the skeleton is inside a region of the keyboard.

The example in which a space is defined by an object has been described merely as an example. However, a space does not necessarily have to be defined by an object, and a space may be defined by a ROI or the like set in a video. In this case, the spatial state recognition unit 15 may refer to, instead of the position information of the object determined through object detection performed by the object recognition unit 13, position information of the ROI stored in the ROI storage unit 15A, for example, vertices, edges, or the like that define a boundary of the ROI.

The higher-level action recognition unit 16 is a processing unit that recognizes a higher-level action. The higher-level action recognition unit 16 may correspond to the higher-level action recognition function 6 illustrated in FIG. 1. As illustrated in FIG. 9, the higher-level action recognition unit 16 includes an element action recognition unit 16A and a scenario recognition unit 16B.

The element action recognition unit 16A is a processing unit that recognizes an element action by comparing time series data of a recognition result regarding one or a plurality of basic motions and/or a spatial state with the element action recognition rule 7A stored in the first rule storage unit 17A. In the element action recognition rule 7A, at least one of or both of a time series pattern regarding one or a plurality of basic motions and a spatial state are defined for each element action to be recognized. Examples of the time series pattern include, for example, the continuity of basic motions, the state transition of basic motions, and so on.

The scenario recognition unit 16B is a processing unit that recognizes a higher-level action by comparing the recognition result of the element action with the scenario recognition rule 7B stored in the second rule storage unit 17B. In the scenario recognition rule 7B, a combination of element actions is defined as a scenario for each higher-level action to be recognized. Such a scenario may be defined as a sequence, logical operations, or the like.

The element action recognition rule 7A and the scenario recognition rule 7B may be set not only by a system definition but also by a user definition. For example, a user U such as a system engineer at a business entity that provides the action recognition service 1 described above or a customer of the action recognition service 1 described above is permitted to edit the element action recognition rule 7A and the scenario recognition rule 7B. In this manner, customization by the user U is enabled.

[Details of Object Recognition Unit 30]

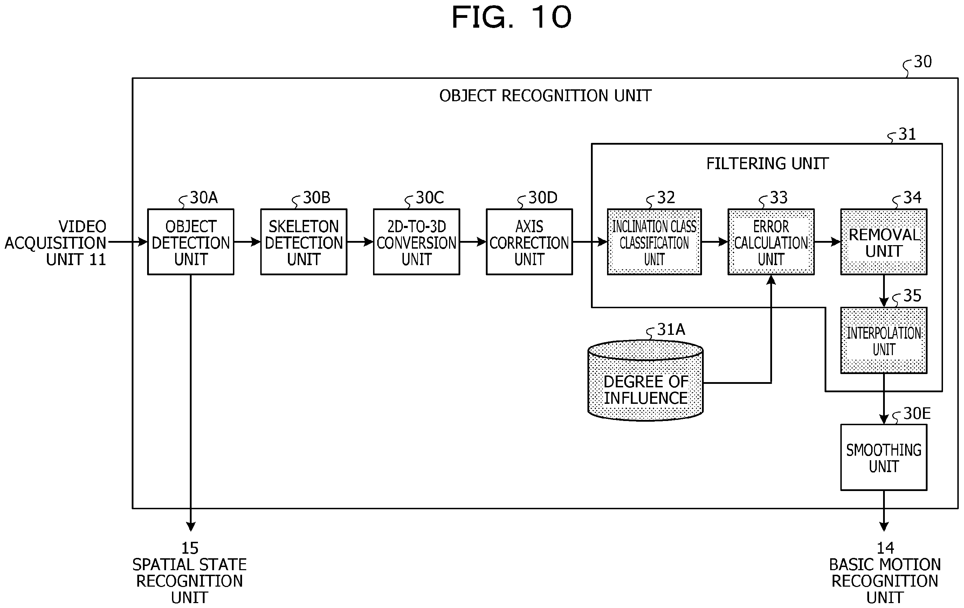

Details of the object recognition unit 30 according to the present embodiment will be described next. FIG. 10 is a diagram illustrating an example of a functional configuration of the object recognition unit 30. As illustrated in FIG. 10, the object recognition unit 30 includes an object detection unit 30A, a skeleton detection unit 30B, a 2D-to-3D conversion unit 30C, an axis correction unit 30D, a smoothing unit 30E, a filtering unit 31, and a degree-of-influence storage unit 31A.

The object detection unit 30A is a processing unit that performs, for each frame of a video, recognition of a region where an object is present, for example, so-called object detection. The object detection unit 30A may correspond to the object detection function 3A illustrated in FIG. 2. In addition to such object detection, the object detection unit 30A may perform recognition of individual objects or a class of an object.

The skeleton detection unit 30B is a processing unit that extracts, by applying processing also referred to as skeleton detection (skeleton estimation) or pose detection (pose estimation) to a person among objects, skeleton information including information on the position of each joint. The skeleton detection unit 30B may correspond to the skeleton detection function 3B illustrated in FIG. 2. Such skeleton detection is performed for individual frames of a video. Consequently, 2D skeleton coordinates in the individual frames of the video, for example, time series data of 2D skeleton coordinates are obtained.

The 2D-to-3D conversion unit 30C is a processing unit that converts time series data of 2D skeleton coordinates into time series data of 3D skeleton coordinates. The 2D-to-3D conversion unit 30C may correspond to the 2D-to-3D conversion function 3C illustrated in FIG. 2.

The functional units of the object detection unit 30A, the skeleton detection unit 30B, and the 2D-to-3D conversion unit 30C may be implemented by a DL framework including a model that has learned objects, a model that has learned skeleton detection, and a model that has learned 2D-to-3D conversion, which is merely an example.

The axis correction unit 30D is a processing unit that performs axis correction on the 3D skeleton coordinates through axis setting in perspective projection transform. The axis correction unit 30D may correspond to the perspective projection transform function 3D illustrated in FIG. 2. For example, the axis correction unit 30D performs axis correction for correcting an inclination of an axis in a depth direction of the camera 2, based on an estimated value of a camera parameter calculated from the 3D skeleton coordinates and a known camera parameter of the camera 2, for example, a calibration result of the camera 2 before operation.

The smoothing unit 30E is a processing unit that performs smoothing in which the time series data of the 3D skeleton coordinates is replaced with an average of the 3D skeleton coordinates in adjacent frames defined in a certain range. The smoothing unit 30E may correspond to the smoothing function 3E illustrated in FIG. 2.

[Example of Functional Configuration of Filtering Unit 31]

The filtering unit 31 is a processing unit that removes 3D skeleton coordinates for which an estimated value of an error, which is obtained from the 3D skeleton coordinates converted by the 2D-to-3D conversion unit 30C and the degree of influence on the error in the 2D-to-3D conversion corresponding to the inclination of the body axis, is greater than or equal to a certain threshold.

As illustrated in FIG. 10, the filtering unit 31 includes an inclination class classification unit 32, an error calculation unit 33, a removal unit 34, and an interpolation unit 35.

The inclination class classification unit 32 is a processing unit that classifies the 3D skeleton coordinates into any of the inclination classes $C_w$. As one embodiment, the inclination class classification unit 32 performs the following processing for each set of the 3D skeleton coordinates on which axis correction is performed by the axis correction unit 30D. For example, the inclination class classification unit 32 calculates the 3D coordinates of the center of the hip by calculating the middle point of the 3D coordinates of the left hip and the 3D coordinates of the right hip, with reference to the 3D coordinates of the left hip and the 3D coordinates of the right hip among the 3D skeleton coordinates. As illustrated in FIG. 5, the inclination class classification unit 32 calculates, as the inclination $w_f$ of the body axis, the angle formed by the body axis $b_{axis}$ obtained by projecting the line segment linking the center of the hip and the head onto the YZ plane and by the positive direction (upward direction) $Y_P$ of the Y axis. The inclination class classification unit 32 then classifies the 3D skeleton coordinates on which the axis correction is performed by the axis correction unit 30D into the inclination class $C_w$ to which the inclination $w_f$ of the body axis corresponds among the inclination classes illustrated in FIG. 6.

The error calculation unit 33 is a processing unit that calculates an estimated value of the error in the 2D-to-3D conversion. As one embodiment, the error calculation unit 33 refers to the degree of influence, for example, the coefficient $k_i$, associated with the inclination class $C_w$ to which the 3D skeleton coordinates are classified by the inclination class classification unit 32 among the degrees of influence stored in the degree-of-influence storage unit 31A. The error calculation unit 33 then calculates the estimated value Error of the error in the 2D-to-3D conversion in accordance with equation (1) described above.

The removal unit 34 is a processing unit that removes 3D skeleton coordinates that satisfy a certain condition among the 3D skeleton coordinates on which axis correction is performed by the axis correction unit 30D. As one embodiment, the removal unit 34 determines whether or not the estimated value Error of the error in the 2D-to-3D conversion calculated by the error calculation unit 33 is greater than or equal to the certain threshold T. When the estimated value Error of the error in the 2D-to-3D conversion is greater than or equal to the threshold value T, a probability that the 3D skeleton coordinates on which axis correction is performed by the axis correction unit 30D are abnormal values increases. In this case, the removal unit 34 removes the 3D skeleton coordinates on which axis correction is performed by the axis correction unit 30D from the target of smoothing performed by the smoothing unit 30E. On the other hand, if the estimated value Error of the error in the 2D-to-3D conversion is not greater than or equal to the threshold value T, a probability that the 3D skeleton coordinates on which axis correction is performed by the axis correction unit 30D are normal values increases. In this case, the 3D skeleton coordinates on which axis correction is performed by the axis correction unit 30D are not removed.

The interpolation unit 35 is a processing unit that interpolates 3D skeleton coordinates in a removal interval from which the 3D skeleton coordinates are removed by the removal unit 34. As one embodiment, the interpolation unit 35 performs linear interpolation, polynomial interpolation, spline interpolation, or the like for an interval from which the 3D skeleton coordinates are removed by filtering in the time series data of the 3D skeleton coordinates after the filtering. Thus, a missing data portion caused by the removal is interpolated. The time series data of the 3D skeleton coordinates resulting from interpolation based on an arbitrary interpolation method in this manner is input to the smoothing unit 30E.

[Flows of Processing]

Flows of processing performed by the action recognition apparatus 10 according to the present embodiment will be described next. Description will be given of (1) action recognition processing performed by the action recognition apparatus 10 and then of (2) object recognition processing.

(1) Action Recognition Processing

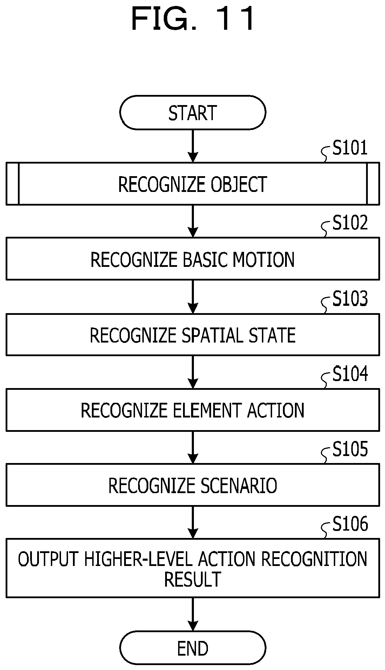

FIG. 11 is a flowchart illustrating a procedure of the action recognition processing according to the first embodiment. This processing is performed in a case where a video is acquired from the camera 2, a storage, an external device coupled over a network, or the like, which is merely an example.

As illustrated in FIG. 11, for each frame of a 2D video acquired by the video acquisition unit 11, the object recognition unit 13 performs "object recognition processing" that includes object detection, skeleton detection, 2D-to-3D conversion, filtering, smoothing, and the like (step S101).

The basic motion recognition unit 14 inputs the time series data of the 3D skeleton coordinates obtained in step S101 to a model that has learned the basic motions and acquires a basic motion recognition result output from the model (step S102).

The spatial state recognition unit 15 recognizes a spatial state, based on a relationship between a person among the objects determined in step S101 and an object among the objects determined in step S101 or a space defined by the ROI set in the video (step S103).

Subsequently, the element action recognition unit 16A recognizes an element action by comparing time series data of the basic motion recognition result obtained in step S102 and/or the spatial state obtained in step S103 with the element action recognition rule 7A stored in the first rule storage unit 17A (step S104).

The scenario recognition unit 16B recognizes a higher-level action by comparing the element action recognition result obtained in step S104 with the scenario recognition rule 7B stored in the second rule storage unit 17B (step S105).

Thereafter, the scenario recognition unit 16B outputs, as a recognition result, a label of the higher-level action obtained in step S105 (step S106). The processing then ends.

The aforementioned higher-level action recognition result may be output to an arbitrary output destination. The "output destination" mentioned herein may be arbitrary hardware or software. For example, the higher-level action recognition result may be output to a service or a function that performs arbitrary backend processing, for example, processing of monitoring a suspicious action or the like, in accordance with the higher-level action recognition result. In addition to this, the output destination of the higher-level action recognition result may be a display device, a sound output device, an information processing apparatus, a mobile terminal apparatus, or the like set by the user U of the above-described action recognition service 1. The notification form of the higher-level action recognition result may be an arbitrary form such as via a website or by email.

(2) Object Recognition Processing

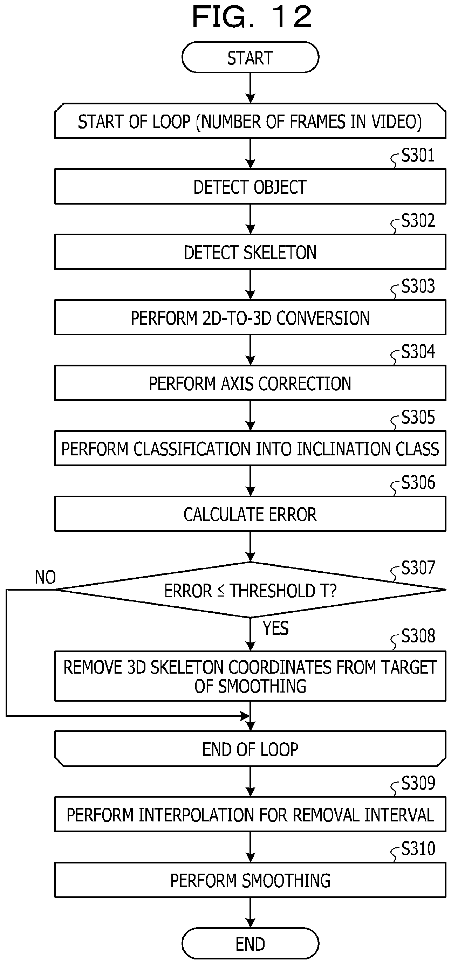

FIG. 12 is a flowchart illustrating a procedure of the object recognition processing according to the first embodiment. This processing corresponds to the processing in step S101 illustrated in FIG. 11. As illustrated in FIG. 12, processing from step S301 below to step S308 below is repeatedly performed as many times as the number of frames of a 2D video.

For example, the object detection unit 30A performs, for each frame of the 2D video, recognition of a region where an object is present, for example, so-called object detection (step S301). The region where the object is present, which is determined through the object detection in step S301, may be output to the spatial state recognition unit 15.

Subsequently, the skeleton detection unit 30B extracts 2D skeleton coordinates including 2D coordinates of each joint by performing, for each frame of the 2D video, skeleton detection on a person among the objects recognized in step S301 (step S302).

The 2D-to-3D conversion unit 30C converts the 2D skeleton coordinates obtained in step S302 into 3D skeleton coordinates (step S303). Thereafter, the axis correction unit 30E performs axis correction on the 3D skeleton coordinates through axis setting in perspective projection transform (step S304).

The inclination class classification unit 32 classifies the 3D skeleton coordinates on which axis correction is performed in step S304 into the inclination class $C_w$ to which the inclination $w_f$ of the body axis determined from the 3D skeleton coordinates corresponds (step S305).

The error calculation unit 33 calculates the estimated value Error of the error in the 2D-to-3D conversion, based on the degree of influence, for example, the coefficient $k_i$, associated with the inclination class $C_w$ to which the 3D skeleton coordinates are classified in step S305 among the degrees of influence stored in the degree-of-influence storage unit 31A, and based on the 3D skeleton coordinates on which axis correction is performed in step S304 (step S306). Thereafter, the removal unit 34 determines whether or not the estimated value Error of the error in the 2D-to-3D conversion calculated in step S306 is greater than or equal to the certain threshold T (step S307).

When the estimated value Error of the error in the 2D-to-3D conversion is greater than or equal to the threshold T (Yes in step S307), the probability that the 3D skeleton coordinates are abnormal values increases. In this case, the removal unit 34 removes the 3D skeleton coordinates on which axis correction is performed in step S304 from the target to be smoothed in step S310 below (step S308). On the other hand, When the estimated value Error of the error in the 2D-to-3D conversion is not greater than or equal to the threshold value T (No in step S307), the probability that the 3D skeleton coordinates are normal values increases. In this case, the 3D skeleton coordinates on which axis correction is performed in step S304 are not removed.

After the processing from step S301 to step S308 is performed for each frame of the 2D video in this manner, the interpolation unit 35 performs the following processing. For example, the interpolation unit 35 interpolates data of a missing portion caused by the removal by performing linear interpolation, polynomial interpolation, spline interpolation, or the like for the removal interval from which the 3D skeleton coordinates are removed in step S308 in the time series data of the 3D skeleton coordinates (step S309).

Thereafter, the smoothing unit 30E performs smoothing for replacing the time series data of the 3D skeleton coordinates resulting from the interpolation in step S309 with the average of the 3D skeleton coordinates in the adjacent frames defined in the certain range (step S310). The processing then ends.

[One Aspect of Effects]

As described above, before 3D skeleton coordinates are smoothed, the filtering function according to the present embodiment removes 3D skeleton coordinates for which the estimated value of the error, which is determined from the 3D skeleton coordinates obtained by 2D-to-3D conversion and the degree of influence on the error in the 2D-to-3D conversion corresponding to the inclination of the body axis, is greater than or equal to the threshold value. Therefore, a situation in which 3D skeleton coordinates that are highly likely to be abnormal values are included in the time series data of the 3D skeleton coordinates to be smoothed is suppressed. Consequently, an adverse influence of the 3D skeleton coordinates for which the occurrence of abnormal values is highly probable on the normal values is suppressed.

Therefore, with the filtering function according to the present embodiment, a higher accuracy in smoothing of 3D skeleton coordinates may be implemented. With implementation of a higher accuracy in smoothing, an improvement in the recognition accuracy of the basic motions, an improvement in the recognition accuracy of the element actions, and ultimately an improvement in the recognition accuracy of the higher-level actions may be implemented. Since highly accurate 3D skeleton coordinates may be obtained from calculated values of the 3D skeleton coordinates obtained through 2D-to-3D conversion, the use of hardware such as a 3D camera that is more costly than a 2D camera and of software for motion capture or the like may be avoided.

[Second Embodiment]

While the embodiment relating to the apparatus of the disclosure has been described hitherto, the present disclosure may be carried out in various different forms other than the embodiment described above. Other embodiments of the present disclosure will be described below.

[Application to Other Use Cases]

In the first embodiment described above, the example in which the filtering function is applied to the action recognition service 1 has been described. However, the filtering function may be applied to other use cases. The filtering function may be applied to a scoring service that scores competitive sports such as gymnastics by using 3D skeleton coordinates as an input and that outputs a scoring result, which is merely an example. Even in a case where the filtering function is applied to such a scoring service, not only a higher accuracy in smoothing of 3D skeleton coordinates may be achieved but also the scoring accuracy may be improved.

[Distribution and Integration]

The individual components of each of the illustrated apparatuses do not necessarily have to be physically constructed as illustrated. For example, specific forms of the distribution and integration of the individual apparatuses are not limited to the illustrated forms, and all or part thereof may be configured in arbitrary units in a functionally or physically distributed or integrated manner depending on various loads, usage states, and the like. For example, the inclination class classification unit 32, the error calculation unit 33, the removal unit 34, or the interpolation unit 35 may be connected via a network as an external device of the filtering unit 31. The inclination class classification unit 32, the error calculation unit 33, the removal unit 34, or the interpolation unit 35 may be included in different apparatuses, and the apparatuses may be coupled to and operate in cooperation with each other via a network. In this manner, the functions of the above-described filtering unit 31 may be implemented.

[Filtering Program]

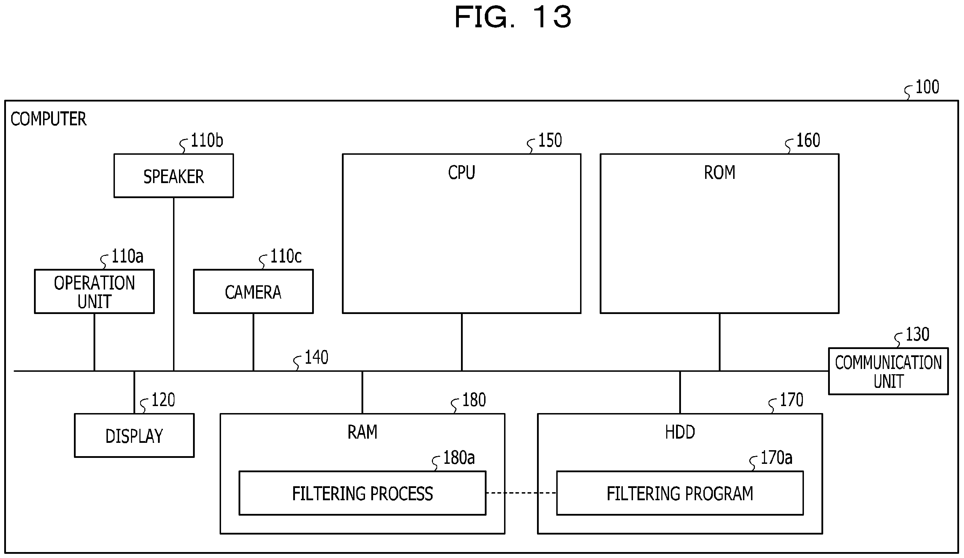

The various kinds of processing described in the embodiments described above may be implemented as a result of a computer such as a personal computer or a workstation executing a program prepared in advance. Accordingly, an example of a computer that executes a filtering program having substantially the same functions as those of the first and second embodiments will be described below by using FIG. 13.

FIG. 13 is a diagram illustrating an example of a hardware configuration of a computer. As illustrated in FIG. 13, a computer 100 includes an operation unit 110a, a speaker 110b, a camera 110c, a display 120, and a communication unit 130. The computer 100 also includes a CPU 150, a read-only memory (ROM) 160, an HDD 170, and a RAM 180. The operation unit 110a, the speaker 110b, the camera 110c, the display 120, the communication unit 130, the CPU 150, the ROM 160, the HDD 170, and the RAM 180 are coupled to each other via a bus 140.

As illustrated in FIG. 13, the HDD 170 stores a filtering program 170a that exerts substantially the same functions as those of the inclination class classification unit 32, the error calculation unit 33, the removal unit 34, and the interpolation unit 35 described above in the first embodiment. The filtering program 170a may be integrated or divided, similarly to the individual components of the inclination class classification unit 32, the error calculation unit 33, the removal unit 34, and the interpolation unit 35 illustrated in FIG. 10. For example, all the data described in the first embodiment above is not necessarily stored in the HDD 170, and data to be used for processing may be stored in the HDD 170.

Under such an environment, the CPU 150 reads out the filtering program 170a from the HDD 170 and loads to the filtering program 170a to the RAM 180. As a result, the filtering program 170a functions as a filtering process 180a as illustrated in FIG. 13. This filtering process 180a loads various kinds of data read from the HDD 170 into an area allocated to the filtering process 180a in a storage area of the RAM 180 and performs various kinds of processing by using these various kinds of loaded data. For example, the processing illustrated in FIGs. 11 and 12 and the like are included as an example of the processing performed by the filtering process 180a. All the processing units described in the first embodiment above do not necessarily operate on the CPU 150, and processing units corresponding to the processing to be performed may be virtually implemented.

The aforementioned filtering program 170a is not necessarily initially stored in the HDD 170 or the ROM 160. For example, the filtering program 170a is stored in "portable physical media" such as a flexible disk so-called an FD, a compact disc (CD)-ROM, a digital versatile disc (DVD), a magneto-optical disk, and an integrated circuit (IC) card to be inserted into the computer 100. The computer 100 may acquire the filtering program 170a from these portable physical media and execute the filtering program 170a. The filtering program 170a may be stored in another computer or a server apparatus coupled to the computer 100 via a public line, the Internet, a LAN, a wide area network (WAN), or the like, and the computer 100 may acquire the filtering program 170a from such an apparatus and execute the filtering program 170a.

## Claims

1. A filtering method comprising:

converting two-dimensional skeleton coordinates obtained through skeleton detection on a two-dimensional video, into three-dimensional skeleton coordinates;
calculating, with reference to degree-of-influence data in which a degree of influence of each joint on an error in two-dimensional-to-three-dimensional coordinate conversion is associated with each of inclination classes that are sectioned in accordance with an inclination of a body axis, an estimated value of the error from the three-dimensional skeleton coordinates and from a degree of influence of each joint that corresponds to an inclination class to which the three-dimensional skeleton coordinates belong; and
removing three-dimensional skeleton coordinates for which the estimated value of the error is greater than or equal to a threshold.

2. The filtering method according to claim 1, further comprising:
smoothing time series data of the three-dimensional skeleton coordinates for which the estimated value of the error is not greater than or equal to the threshold.

3. The filtering method according to claim 2, further comprising:

performing interpolation for an interval from which the three-dimensional skeleton coordinates are removed in the time series data of the three-dimensional skeleton coordinates,
wherein the smoothing includes processing for smoothing time series data of three-dimensional skeleton coordinates that results from the interpolation.

4. The filtering method according to claim 1, wherein the degree of influence is a coefficient for each joint when a variance in the error observed for each joint is set as a response variable and a relative coordinate of each joint is set as an explanatory variable.

5. The filtering method according to claim 4, wherein the relative coordinate is a coordinate obtained by normalizing a distance of each joint from a hip by a length of a hip section and a length of a neck section.

6. The filtering method according to claim 1, wherein the inclination of the body axis is an inclination of a body in a front-rear direction with respect to a vertical-direction axis.

7. A filtering program in which a computer performs processing of:

converting two-dimensional skeleton coordinates obtained through skeleton detection on a two-dimensional video, into three-dimensional skeleton coordinates;

calculating, with reference to degree-of-influence data in which a degree of influence of each joint on an error in two-dimensional-to-three-dimensional coordinate conversion is associated with each of inclination classes that are sectioned in accordance with an inclination of a body axis, an estimated value of the error from the three-dimensional skeleton coordinates and from a degree of influence of each joint that corresponds to an inclination class to which the three-dimensional skeleton coordinates belong; and

removing three-dimensional skeleton coordinates for which the estimated value of the error is greater than or equal to a threshold.

8. The filtering program according to claim 7, wherein

the processing further includes smoothing time series data of the three-dimensional skeleton coordinates for which the estimated value of the error is not greater than or equal to the threshold.

9. The filtering program according to claim 8, wherein

the processing further includes performing interpolation for an interval from which the three-dimensional skeleton coordinates are removed in the time series data of the three-dimensional skeleton coordinates, wherein the smoothing includes processing for smoothing time series data of three-dimensional skeleton coordinates that results from the interpolation.

10. The filtering program according to claim 7, wherein the degree of influence is a coefficient for each joint when a variance in the error observed for each joint is set as a response variable and a relative coordinate of each joint is set as an explanatory variable.

11. The filtering program according to claim 10, wherein the relative coordinate is a coordinate obtained by normalizing a distance of each joint from a hip by a length of a hip section and a length of a neck section.

12. The filtering program according to claim 7, wherein the inclination of the body axis is an inclination of a body in a front-rear direction with respect to a vertical-direction axis.

13. A filtering apparatus comprising:

a conversion unit configured to convert two-dimensional skeleton coordinates obtained through skeleton detection on a two-dimensional video, into three-dimensional skeleton coordinates;

an error calculation unit configured to calculate (specify), with reference to degree-of-influence data in which a degree of influence of each joint on an error in two-dimensional-to-three-dimensional coordinate conversion is associated with each of inclination classes that are sectioned in accordance with an inclination of a body axis, an estimated value of the error from the three-dimensional skeleton coordinates and from a degree of influence of each joint that corresponds to an inclination class to which the three-dimensional skeleton coordinates belong; and

a removal unit configured to remove three-dimensional skeleton coordinates for which the estimated value of the error is greater than or equal to a threshold.

14. The filtering apparatus according to claim 13, further comprising:
a smoothing unit configured to smooth time series data of the three-dimensional skeleton coordinates for which the estimated value of the error is not greater than or equal to the threshold.

15. The filtering apparatus according to claim 14, further comprising:

an interpolation unit configured to perform interpolation for an interval from which the three-dimensional skeleton coordinates are removed in the time series data of the three-dimensional skeleton coordinates, wherein the smoothing includes processing for smoothing time series data of three-dimensional skeleton coordinates that results from the interpolation.

# FIG. 1

# FIG. 2

EP 3 971 822 A2

OBJECT RECOGNITION FUNCTION — 3

| OBJECT DETECTION FUNCTION 3A | SKELETON DETECTION FUNCTION 3B | 2D-TO-3D CONVERSION FUNCTION 3C | PERSPECTIVE PROJECTION TRANSFORM FUNCTION 3D | SMOOTHING FUNCTION 3E |

# FIG. 3

# FIG. 4

# FIG. 5

# FIG. 6

| | | BODY AXIS IS VERTICAL |
|---|---|---|
| | CLASS $C_1$ | |
| | CLASS $C_2$ | |
| | CLASS $C_3$ | |
| | CLASS $C_4$ | |
| ⋮ | | BODY AXIS IS HORIZONTAL |

# FIG. 7

# FIG. 8

# FIG. 9

ACTION RECOGNITION APPARATUS 10

16

17B
SECOND RULE

16B
SCENARIO RECOGNITION UNIT

17A
FIRST RULE

16A
ELEMENT ACTION RECOGNITION UNIT

14
BASIC MOTION RECOGNITION UNIT

15
SPATIAL STATE RECOGNITION UNIT

15A
ROI

30
OBJECT RECOGNITION UNIT

11
VIDEO ACQUISITION UNIT

2
CAMERA

FIG. 10

# FIG. 11

```
                    ┌─────────────┐
                    │    START    │
                    └─────────────┘
                           │
                           ▼            ⌠S101
        ╔══════════════════════════════════════╗
        ║          RECOGNIZE OBJECT            ║
        ╚══════════════════════════════════════╝
                           │
                           ▼            ⌠S102
        ┌──────────────────────────────────────┐
        │        RECOGNIZE BASIC MOTION        │
        └──────────────────────────────────────┘
                           │
                           ▼            ⌠S103
        ┌──────────────────────────────────────┐
        │        RECOGNIZE SPATIAL STATE       │
        └──────────────────────────────────────┘
                           │
                           ▼            ⌠S104
        ┌──────────────────────────────────────┐
        │        RECOGNIZE ELEMENT ACTION      │
        └──────────────────────────────────────┘
                           │
                           ▼            ⌠S105
        ┌──────────────────────────────────────┐
        │          RECOGNIZE SCENARIO          │
        └──────────────────────────────────────┘
                           │
                           ▼            ⌠S106
        ┌──────────────────────────────────────┐
        │ OUTPUT HIGHER-LEVEL ACTION RECOGNITION│
        │                RESULT                │
        └──────────────────────────────────────┘
                           │
                           ▼
                    ┌─────────────┐
                    │     END     │
                    └─────────────┘
```

# FIG. 12

START

START OF LOOP (NUMBER OF FRAMES IN VIDEO)

S301
DETECT OBJECT

S302
DETECT SKELETON

S303
PERFORM 2D-TO-3D CONVERSION

S304
PERFORM AXIS CORRECTION

S305
PERFORM CLASSIFICATION INTO INCLINATION CLASS

S306
CALCULATE ERROR

S307
ERROR ≤ THRESHOLD T?     NO

YES

S308
REMOVE 3D SKELETON COORDINATES FROM TARGET OF SMOOTHING

END OF LOOP

S309
PERFORM INTERPOLATION FOR REMOVAL INTERVAL

S310
PERFORM SMOOTHING

END

# FIG. 13

EP 3 971 822 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OPPENHEIM, ALAN V. ; SCHAFER, RONALD W. ; BUCK, JOHN R.** Discrete-Time Signal Processing. Prentice Hall, 1999
- **MITRA, SANJIT K.** Digital Signal Processing. Mc-Graw-Hill, 2001
- **GUSTAFSSON, F.** Determining the initial states in forwardbackward filtering. *IEEE (R) Transactions on Signal Processing,* April 1996, vol. 44, 988-992
- **MARTINEZ, JULIETA ; HOSSAIN, RAYAT ; ROMERO, JAVIER ; LITTLE, JAMES J.** A simple yet effective baseline for 3d human pose estimation. *ICCV,* 2017
- **MEHTA, D. ; SRIDHAR, S. ; SOTNYCHENKO, O. ; RHODIN, H. ; SHAFIEI, M. ; SEIDEL, H.-P. ; XU, W. ; CASAS, D. ; THEOBALT, C.** VNect: Real-time 3d Human Pose Estimation with a Single RGB Camera. *ACM TOG,* 2017